# EUROPÄISCHE PATENTANMELDUNG

(11) **EP 4 180 214 A1**
(43) Veröffentlichungstag der Anmeldung: **17.05.2023**
(21) Anmeldenummer: 22214876.9
(22) Anmeldetag: 04.10.2018
(51) Int. Cl.: B29D 11/00, B29C 33/04, G02B 3/08, B29C 33/30, B29C 39/38, B29C 39/42, B29L 11/00

(54) **FRESNELLINSEN FÜR KRAFTFAHRZEUGSCHEINWERFER**

(62) Teilanmeldung aus: 18198573.0
(71) Anmelder: ZKW Group GmbH, 3250 Wieselburg (AT)
(72) Erfinder: Schadenhofer, Peter, 3382 Roggendorf (AT); Hacker, Alexander, 3150 Wilhelmsburg (AT); Gürtl, Josef, 3233 Kilb (AT); Mandl, Bernhard, 1100 Wien (AT)
(74) Vertreter: Patentanwaltskanzlei Matschnig & Forsthuber OG

(57) **Zusammenfassung**

Fresnellinse für ein Kraftfahrzeugscheinwerferlichtmodul, wobei die Fresnellinse (1) als ein Verbund ausgebildet ist, welcher Verbund eine formstabile Substratschicht (2) und zumindest eine Polymerschicht (3) aus zumindest einem chemisch härtbaren Polymer (4) umfasst, wobei sowohl die formstabile Substratschicht (2) als auch die zumindest eine Polymerschicht (3) transparent sind und die zumindest eine Polymerschicht (3) an zumindest einer Fläche (20, 21) der formstabilen Substratschicht (2) flächig haftet, wobei regelmäßig angeordnete lichtbrechende ringförmige Stufen (10) der Fresnellinse (1)
- in der zumindest einen Polymerschicht (3) ausgebildet sind und
- keine Auszugsschräge aufweisen, wobei
die regelmäßig angeordneten lichtbrechenden ringförmigen Stufen (10) an ihren optisch nicht wirksamen Seitenflächen (100) Narbungen aufweisen.

## Beschreibung

Die Erfindung betrifft eine Fresnellinse, die als ein Verbund ausgebildet ist, welcher Verbund eine formstabile Substratschicht und zumindest eine Polymerschicht aus zumindest einem chemisch härtbaren Polymer umfasst, wobei sowohl die formstabile Substratschicht als auch die zumindest eine Polymerschicht transparent sind und die zumindest eine Polymerschicht an zumindest einer Fläche der formstabilen Substratschicht flächig haftet.

Darüber hinaus betrifft die Erfindung ein Kraftfahrzeugscheinwerferlichtmodul, vorzugsweise ein Abblendlichtmodul, beziehungsweise einen Kraftfahrzeugscheinwerfer umfassend zumindest eine vorgenannte Fresnellinse.

Verfahren zum Herstellen von Linsen und unter anderem Fresnellinsen sind bekannt. Beim Gießverfahren (Schwerkraft- oder Druckgussverfahren) wird üblicherweise Glas oder Kunststoff in eine vordefinierte Form gegossen beziehungsweise gepresst. Danach erfolgt eine passive Abkühlungsphase, nach der die Linse fertig ist. Solche Verfahren haben zum Nachteil, dass die passive Abkühlphase zeitintensiv und der Herstellungsprozess zu viel Zeit in Anspruch nimmt. Darüber hinaus weisen mit den vorgenannten Standardverfahren erzeugte Fresnellinsen (wie in DE 2920630 A1) keine besonders guten optischen Eigenschaften auf.

An dieser Stelle sei erinnert, dass eine Fresnellinse regelmäßig angeordnete brechende ringförmige Stufen beziehungsweise Facetten aufweist, die so aufgebaut, ausgebildet und einander zugeordnet sind, die Fresnellinse je nach Wunsch wie eine beispielsweise sphärische oder zylindrische Linse wirkt. Die regelmäßig angeordneten brechenden ringförmigen Stufen entsprechen dabei radialen Segmenten einer beispielsweise sphärischen oder zylindrischen Linse gleicher Brennweite und in genauer Wiederholung dieser radialen Segmente gekrümmt. In der Praxis können die Facetten aber als Tangenten der gekrümmten Flächen individueller Segmente ausgebildet sein; das kann beispielsweise dann eine ausreichend gute Annäherung, wenn die Zahl der brechenden ringförmigen Stufen pro Einheit des Radius der entsprechenden sphärischen oder zylindrischen Linse groß genug ist. Eine typische Fresnellinse kann etwa 10 bis 60 Elemente pro cm Radius der Linse besitzen. Jede brechende ringförmige Stufe weist eine optisch wirksame und nicht optisch wirksame Seitenfläche auf. Durch Streuung von Licht an nicht optisch wirksamen Seitenflächen kann das erzeugte Lichtbild beeinträchtigt werden.

Um die nach den vorgenannten Standardverfahren (Kunststoffspritzguß oder Kunststoffspritzprägeprozess) erzeugten Fresnellinsen aus einer Negativform zu entformen bedarf es einer Auszugsschräge. Die Auszugsschräge schränkt die optische Auslegung deutlich ein und führt üblicherweise zu unerwünschten Streulichteffekten - zum sogenannten Fehllicht. Die Menge an Fehllicht, das durch Brechung an optisch nicht wirksamen Seitenflächen der Facetten der Fresnellinse (diese Seitenflächen werden oft als Flanken bezeichnet) entsteht, ist so hoch, dass Lichtverteilungen, die unter Verwendung solcher Fresnellinsen erzeugt werden, den hohen lichttechnischen Anforderungen in dem KFZ-Bereich nicht gerecht werden können. Weiters gibt es durch Schrumpfung des Kunststoffes auch noch einen Radius auf den Spitzen der Fresnelstrukturen, auch diese Verrundungen führen zu Streulicht.

Trotz zahlreicher Versuche die etablierten Standardverfahren zu verbessern, ist es bis heute noch nicht gelungen, alle oben genannten Nachteile zu beseitigen. Ein Versuch die Verfahren zu beschleunigen oder Negativformen zu verwenden, mit welchen Fresnellinsen ohne Auszugsschrägen herstellbar wären, führen beispielsweise aufgrund entstehender thermischer Spannungen zu Rissbildung (aufgrund niedriger Wärmeausdehnungskoeffizienten der verwendeten Materialien) und/oder Verzug (eine komplett planare Lichteintrittsfläche ist in der Kunststofffertigung nur sehr schwierig zu realisieren) im Endprodukt.

Verwendung von Standardabbildungslinsen in Kraftfahrzeuglichtmodulen birgt ebenfalls Nachteile. Solche Linsen haben beispielsweise den Nachteil, dass sie aufgrund ihrer Größe (Durchmesser bis zu 70mm) ein hohes Gewicht haben und somit auch den Schwerpunkt des Gesamtprojektionsmoduls deutlich nach vorne (in die Fahrtrichtung) verschieben. Im Hauptscheinwerferbereich gibt es sehr hohe mechanische Anforderungen, weshalb es erwünscht ist, alle Module möglichst im Schwerpunkt zu lagern. Aus konstruktiver Sicht wünscht man sich daher die Lagerung in einem hinteren Bereich eines Projektionsmoduls, um möglichst nah an der Verstellmechanik der Grundeinstellung zu liegen. Weiters führt der dicke Materialquerschnitt bei Standardabbildungslinsen zu sehr hohen Zykluszeiten. Beispielsweise liegen die Zykluszeiten bei Kunststofflinsen im zweistelligen Minutenbereich. Deshalb ist es notwendig die Spritzgusswerkzeuge mit mehreren Kavitäten auszuführen, um annähernd schnell die benötigte Stückzahl von Standardabbildungslinsen erzeugen zu können.

Herstellung von KFZ-Bereich tauglichen Fresnellinsen und Verbesserung der Linsenherstellungsverfahren stellen ein seit langem bestehendes Problem dar, welches besonders aufgrund eines ständigen Platzmangels in immer kleiner werdenden Kraftfahrzeugscheinwerfern und immer höher werdenden Produktionszahlen immer mehr an Bedeutung gewinnt.

Die Aufgabe der vorliegenden Erfindung besteht darin, die oben genannten Nachteile des Standes der Technik zu beseitigen.

Eine Linse kann mit einem Abformverfahren hergestellt werden, wobei das Abformverfahren folgende Schritte aufweist:
- Bereitstellen von:
   * der formstabilen Substratschicht;
   * dem zumindest einen chemisch härtbaren Polymer, wobei sowohl die formstabile Substratschicht als auch das zumindest eine chemisch härtbare Polymer transparent sind, und
   * einer Negativform;
- Gießen beziehungsweise Dosieren des zumindest einen chemisch härtbaren Polymers in die Negativform;
- Aufsetzten beziehungsweise Auflegen der formstabilen Substratschicht auf die Negativform, so dass das in der Negativform befindliche zumindest eine chemisch härtbare Polymer mit zumindest einer Fläche der formstabilen Substratschicht flächig in Kontakt kommt;
- Aushärten des zumindest einen chemisch härtbaren Polymers, um die zumindest eine Polymerschicht zu erhalten, wobei die zumindest eine Polymerschicht an der zumindest einen Fläche der formstabilen Substratschicht haftet;
- Entformen des erhaltenen Verbunds aus der formstabilen Substratschicht und der zumindest einen an der zumindest einen Fläche der formstabilen Substratschicht haftenden Polymerschicht aus der Negativform, um die Linse zu erhalten.

Es versteht sich, dass das zumindest eine chemisch härtbare Polymer in flüssiger Form bereitgestellt werden kann.

Dabei soll beim Durchstrahlen von einem "transparenten Material" nicht mehr als 10% des Lichtstroms für Licht in einem Wellenlängenbereich zwischen etwa 400 nm und etwa 800 nm (sichtbares Licht) verloren gehen. Beispielsweise weist ein transparentes Material einen Transmissionsgrad T größer als 95%, vorzugsweise größer als 99,9%, insbesondere größer als 99,98 % auf.

Es hat sich überraschenderweise herausgestellt, dass das Verfahren nicht nur bei Fresnellinsen sondern auch bei anderen mehrschichtigen Linsen Vorteile (Zeitgewinn, bessere optische Eigenschaften, etc.) bringt.

Die formstabile Substratschicht dient als Träger der zumindest einen Polymerschicht. Die Form der zumindest einen Polymerschicht legt im Wesentlichen die optischen Eigenschaften der Linse wie beispielsweise ihre Brennweite fest. Durch Formstabilität der Substratschicht kann insbesondere gewährleistet werden, dass die Linse, beispielsweise die Fresnellinse, die mechanischen Standardanforderungen von Hauptscheinwerfersystemen erfüllt (Schock- und Vibrationsanforderungen).

Das zumindest eine chemisch härtbare Polymer kann aus der Gruppe ausgewählt sein, welche besteht aus: thermisch härtbarem Silikon, beispielsweise Zwei-Komponenten-Silikon, UV-härtbarem Epoxidharz, UV-härtbarem Acrylat. Das thermisch härtbare Silikon kann zweckmäßigerweise eine Shore-A-Härte von etwa 30 bis etwa 100, vorzugsweise von etwa 40 bis etwa 90 aufweisen. Der UV-härtbare Epoxidharz oder das UV-härtbare Acrylat kann bevorzugterweise eine Shore-D-Härte von etwa 50 bis etwa 90, insbesondere von etwa 60 bis etwa 80 aufweisen. Unter dem Begriff UV-härtbares Polymer wird ein Polymer verstanden, das unter Einwirkung von ultravioletten (UV) Strahlung aushärtet beziehungsweise UV reaktiv ist. Bei solchen UV-härtenden Polymeren kann es zweckdienlich sein, das Aushärten unter Verwendung von UV-Strahlung zu beschleunigen. Dabei kann eine kurzwellige UV-Strahlung (ca. 200 nm bis 380 nm- Wellenlänge) besonders vorteilhaft sein.

Ein besonderer Zeitvorteil kann erreicht werden, wenn das Aushärten des chemisch härtbaren Polymers durch Temperieren der Negativform erfolgt und folgende Teilschritte umfasst:
- Erhitzen der Negativform auf eine vorbestimmte erste Temperatur, wobei die erste Temperatur beispielsweise in einem Bereich zwischen etwa 90° C und etwa 200° C, vorzugsweise zwischen etwa 100° C und etwa 150° C, insbesondere zwischen etwa 100° C und etwa 120° C oder etwa 120° C und etwa 150° C liegt, und
- Halten der Negativform bei der vorbestimmten ersten Temperatur für eine vorzugsweise von der vorbestimmten ersten Temperatur abhängige Dauer erfolgt, wobei die Dauer beispielsweise zwischen etwa 0,5 Minuten und 6 Minuten, vorzugsweise zwischen 1 Minute und 5 Minuten beträgt. Es kann dabei zweckmäßig sein, die Negativform aus Messing auszubilden. Solche Negativformen aus Messing werden oft als Messingkörper genannt. Das vorgenannte Temperieren der Negativform ist besonders vorteilhaft, wenn thermisch härtenden Polymere verwendet werden.

Bei einer bevorzugten Ausführungsform liegt die Gesamtzykluszeit (Herstellung einer Linse, beispielsweise einer Fresnellinse) bei unter 3 Minuten.

Die Qualität der Linse kann noch mehr verbessert werden, wenn das Entformen des erhaltenen Verbunds aus der formstabilen Substratschicht und der an der zumindest einen Fläche der formstabilen Substratschicht haftenden Polymerschicht aus der Negativform folgende Teilschritte aufweist:
- Kühlen der Negativform auf eine vorbestimmte zweite Temperatur und
- Entfernen der Negativform von der an der zumindest einen Fläche der formstabilen Substratschicht haftenden Silikonschicht.

Während des Kühlvorgangs zieht sich das chemisch härtbare Polymer, wie thermisch härtbares Silikon aufgrund seines hohen Wärmeausdehnungskoeffizienten zusammen, wodurch sich die fertighergestellte Linse, wie eine Fresnellinse zerstörungsfrei d.h. ohne eine potentielle Schädigung der zumindest einen Polymerschicht aus dem Werkzeug (der Negativform) herauslösen lässt. Damit reduziert sich die Ausschussquote (Fehlerquote) erheblich.

Dabei kann es zweckmäßig sein, mittels Druckluft und/oder Kühlflüssigkeit zu kühlen.

Um die Haftung der Silikonschicht und im Allgemeinen - der Polymerschicht an der formstabilen Substratschicht zu verbessern, kann es zweckdienlich sein, wenn die zumindest eine Fläche der formstabilen Substratschicht, die beim Aufsetzen der formstabilen Substratschicht auf die Negativform mit dem zumindest einen, in der Negativform befindlichen, chemisch härtbaren Polymer flächig in Kontakt kommt, vor dem Aufsetzen vorbehandelt wird. Beispielsweise kann die Vorbehandlung mittels SurASil^{®}- Technik erfolgen.

Dabei kann mit Vorteil vorgesehen sein, dass die Vorbehandlung der zumindest einen Fläche der formstabilen Substratschicht vor dem Aufsetzen der formstabilen Substratschicht auf die Negativform folgende Schritte umfasst:
- Reinigen der zumindest einen Fläche;
- Durchführen einer Oberflächenvorbehandlung der zumindest einen Fläche mittels Flammensilikatisierung.

Es kann zweckdienlich sein, wenn die formstabile Substratschicht zumindest teilweise aus (transparentem) Glas oder (transparentem) Thermoplast ist und vorzugsweise eine Dicke von etwa 0,5 mm bis etwa 4 mm, beispielsweise von 1,1 mm aufweist. Ist die stabile Substratschicht zu dünn, besteht die Gefahr, dass sie bricht. Bei zu dicken Substratschichten geht ein zu großer Teil der Lichtintensität beim Durchgang des Lichts durch die Lise verloren. Außerdem würden die Herstellungszeiten steigen. Weiters kann die Negativform eine der herzustellenden Linse entsprechende formgebende Oberfläche, beispielsweise ein Facettenmuster einer Fresnellinse aufweisen, wobei das Facettenmuster einer Fresnellinse vorzugsweise keine Auszugsschräge aufweist. Wird eine Fresnellinse hergestellt, so können ihre optischen Eigenschaften weiterhin verbessert werden, wenn ein entsprechender Bereich der formgebenden Oberfläche zum Ausbilden von Narbungen an optisch nicht wirksamen Seitenflächen der regelmäßig angeordneten lichtbrechenden ringförmigen Stufen der Fresnellinse ausgebildet ist.

Durch Verwendung von einem transparenten Glas in Kombination mit einem thermisch härtbaren Silikon, das eine Shore-A-Härte von etwa 30 bis etwa 100, vorzugsweise von etwa 40 bis etwa 90 aufweist, und dem vorgenannten Temperieren der Negativform können beispielsweise verschiedene Geometrien der regelmäßig angeordneten lichtbrechenden ringförmigen Stufen der Fresnellinse realisiert werden, welche mit einem Standardprozess nicht abgebildet werden können. Beispiele solcher Geometrien sind unten genannte Narbungen und spitzwinklige Spitzen.

Bei dem Verfahren können, wie bereits erwähnt, auch andere Polymere verwendet werden. Für die alternativen Materialien wie die vorgenannten UV-härtbaren Epoxidharze oder Acrylate liegt ihre Shore-D-Härte in einem Bereich zwischen etwa 50 und etwa 90. Bei Verwendung manch alternativen Materialien, kann es zweckmäßig sein eine Negativform aus Silikonkaztschuk zu verwenden. Darüber hinaus kann es zweckmäßig sein, wenn das Aushärten von UV-härtbaren Expoxidharzen oder UV-härtbaren Acrylaten mittels UV Strahlung durchgeführt wird.

Es ist auch denkbar das Aushärten der UV-härtbaren Expoxidharze oder der UV-härtbaren Acrylate, wie vorgenannt, durch Temperieren der Negativform zu beschleunigen.

Das vorstehend beschriebene Abformverfahren kann weiters zum Herstellen von Linsen, insbesondere von Fresnellinsen, die als ein Verbund aus zwei transparenten Polymerschichten aus jeweils zumindest einem chemisch härtbaren Polymer ausgebildet sind, angewendet werden. Dabei können die Polymerschichten an einander gegenüberliegenden Flächen der formstabilen Substratschicht flächig haften. Dabei kann die fertige Linse mit einer Polymerschicht umgedreht und das Verfahren wiederholt werden.

Die Aufgabe wird mit einer Fresnellinse der oben genannten Art erfindungsgemäß dadurch gelöst, dass regelmäßig angeordnete lichtbrechende ringförmige Stufen der Fresnellinse in der zumindest einen Polymersschicht ausgebildet sind und keine Auszugsschräge aufweisen. Vorzugsweise weist dabei die formstabile Substratschicht der erfindungsgemäßen Fresnellinse keine regelmäßig angeordneten lichtbrechenden ringförmigen Stufen.

Im Zusammenhang mit der erfindungsgemäßen Fresnellinse wird unter dem Ausdruck "keine Auszugsschräge" verstanden, dass optisch nicht wirksame Seitenflächen der regelmäßig angeordneten lichtbrechenden ringförmigen Stufen der Fresnellinse im Wesentlichen senkrecht, vorzugsweise senkrecht zu der zumindest einen Fläche der formstabilen Substratschicht angeordnet sind. Der Begriff "Auszugsschräge" findet auch auf die vorgenannte Negativform eine entsprechende Anwendung.

Unter "im Wesentlichen senkrecht" werden in diesem Zusammenhang nur sehr kleine Abweichungen (unter 3°, vorzugsweise unter 1°) verstanden.

Es kann Platzvorteile bringen, wenn die formstabile Substratschicht zumindest teilweise aus transparentem Glas oder transparentem Thermoplast ist und vorzugsweise eine Dicke von etwa 0,5 mm bis 4 mm, beispielsweise von etwa 1,1 mm aufweist.

Wenn das transparente Glas an der von der Polymerschicht freien Fläche geschliffen ist, kann eine verbesserte Lichteintrittsfläche der Linse erzielt werden.

Bei einer praxisbewährten Ausführungsform kann mit Vorteil vorgesehen sein, dass das zumindest eine chemisch härtbare Polymer aus der Gruppe ausgewählt ist, welche besteht aus: thermisch härtbarem Silikon, beispielsweise Zwei-Komponenten-Silikon, UV-härtbarem Epoxidharz, UV-härtbarem Acrylat, wobei das thermisch härtbare Silikon beispielsweise eine Shore-A-Härte von etwa 30 bis etwa 100, vorzugsweise von etwa 40 bis etwa 90 aufweist und/oder der UV-härtbare Epoxidharz oder das UV-härtbares Acrylat vorzugsweise eine Shore-D-Härte von etwa 50 bis etwa 90, insbesondere von etwa 60 bis etwa 80 aufweist.

Besondere Vorteile hinsichtlich optischer Eigenschaften ergeben sich, wenn die regelmäßig angeordneten lichtbrechenden ringförmigen Stufen an ihren optisch nicht wirksamen Seitenflächen Narbungen aufweisen.

Es kann darüber hinaus vorgesehen sein, dass die regelmäßig angeordneten lichtbrechenden ringförmigen Stufen abgerundete oder spitzwinklige Spitzen aufweisen.

Besondere Vorteile ergeben sich, wenn die regelmäßig angeordneten lichtbrechenden ringförmigen Stufen durchgehend sind. Darunter werden ringförmige Stufen verstanden, die in ihrer Umlaufrichtung nicht, wie etwa durch unregelmäßig auftretende Vertiefungen und/ oder Erhebungen unterbrochen werden.

Bei einer bevorzugten Ausführungsform kann vorgesehen sein, dass die regelmäßig angeordneten lichtbrechenden ringförmigen Stufen eine Höhe in einem Bereich zwischen etwa 0,01 mm und etwa 2 mm, vorzugsweise zwischen etwa 0,1 mm und etwa 1,5 mm, insbesondere eine Höhe von etwa 0,1 mm aufweisen. Dabei kann die Höhe einer jeden regelmäßig angeordneten lichtbrechenden ringförmigen Stufe in Umlaufrichtung gleich oder unterschiedlich sein. Darüber hinaus können (in Radialrichtung der Fresnellinse) unterschiedliche regelmäßig angeordnete lichtbrechende ringförmige Stufen unterschiedliche Höhe aufweisen. Beispielsweise können der Facetten an den Rändern der Fresnellinse höher ausgebildet sein als in der Mitte.

Dabei kann Rillenbreite, das heißt ein Abstand zwischen den Spitzen von zwei benachbarten regelmäßig angeordneten lichtbrechenden ringförmigen Stufen, der in der zumindest einen Polymerschicht ausgebildeten Fresnelstruktur zwischen 0,1 mm und 2 mm liegen, beispielsweise 1 mm betragen.

Dabei kann mit Vorteil vorgesehen sein, dass eine Gesamtdicke der Fresnellinse unter 4 mm liegt.

Weiters kann mit Vorteil vorgesehen sein, dass die Fresnellinse zwei transparente Polymerschichten aus jeweils zumindest einem chemisch härtbaren Polymer aufweist, welche Polymerschichten an einander gegenüberliegenden, beispielsweise planen Flächen der formstabilen Substratschicht haften.

Hinsichtlich Flexibilität der optischen Auslegung der Fresnellinse ist besonders vorteilhaft, wenn die formstabile Substratschicht zumindest teilweise aus transparentem Glas ist und die zumindest eine Polymerschicht aus transparentem Zwei-Komponenten-Silikon ist.

Mit einer Linsenherstellungseinrichtung, welche ferner eine Aushärteinrichtung zum Aushärten des chemisch härtbaren Polymers in der Negativform aufweist, kann eine Linse hergestellt werden.

Es kann vorgesehen sein, dass die Aushärteinrichtung ein Heizmittel und die Linsenherstellungseinrichtung ferner eine Kühlvorrichtung umfasst, wobei das Heizmittel eingerichtet ist, die Negativform zu erhitzen, und die Kühlvorrichtung eingerichtet ist, die Negativform zu kühlen.

Weiters kann vorgesehen sein, dass das Heizmittel eine oder mehrere Heizpatronen umfasst, die der Negativform zugeordnet und vorzugsweise an der formgebenden Oberfläche der Negativform derart angeordnet sind, dass sie zwar die formgebende Oberfläche nicht berühren, aber nah genug an dieser sind, um die abgegebene Wärme im Wesentlichen ohne Verluste an die formgebende Oberfläche abgeben zu können.

Darüber hinaus kann es zweckdienlich sein, wenn die Kühlvorrichtung an der Negativform angeordnet ist, vorzugsweise mit der Negativform fest verbunden ist.

Außerdem ist es denkbar, dass das Heizmittel eingerichtet ist, die Negativform auf eine vorbestimmte erste Temperatur zu erhitzen, wobei die erste Temperatur beispielsweise in einem Bereich zwischen etwa 90° C und etwa 200° C, vorzugsweise zwischen etwa 100° C und etwa 150° C, insbesondere zwischen etwa 100° C und etwa 120° C oder etwa 120° C und etwa 150° C liegt.

Dabei kann die Kühlvorrichtung mit Vorteil dazu eingerichtet sein, die auf die vorbestimmte erste Temperatur erhitzte Negativform auf eine vorbestimmte zweite Temperatur zu kühlen, wobei die zweite Temperatur beispielsweise in einem Bereich zwischen etwa 40° C und etwa 70° C, vorzugsweise zwischen etwa 50° C und etwa 60° C liegt.

Die Erfindung ist im Folgenden anhand beispielhafter und nicht einschränkender Ausführungsformen näher erläutert, die in den Figuren veranschaulicht sind. Darin zeigt
Fig. 1a eine Fresnellinse;
Fig. 1b Verfahren zum Herstellen einer Fresnellinse;
Fig. 2a und 2b eine Negativform mit Heizpatronen und Kühlkanälen mit einem Facettenmuster für eine Fresnellinse;
Fig. 3a und 3b Abblendlichtverteilungen, die unter Verwendung von der Fresnellinse der Figur 1a erzeugt sind;
Fig. 4 eine Negativform mit einem Mikrolinsenarray-Muster;
Fig. 5 eine Linsenherstellungseinrichtung.

In den folgenden Figuren bezeichnen - sofern nicht anders angegeben - gleiche Bezugszeichen gleiche Merkmale.

Die Bezugsziffern in den Ansprüchen dienen lediglich zum besseren Verständnis der vorliegenden Erfindungen und bedeuten auf keinen Fall eine Beschränkung der vorliegenden Erfindungen.

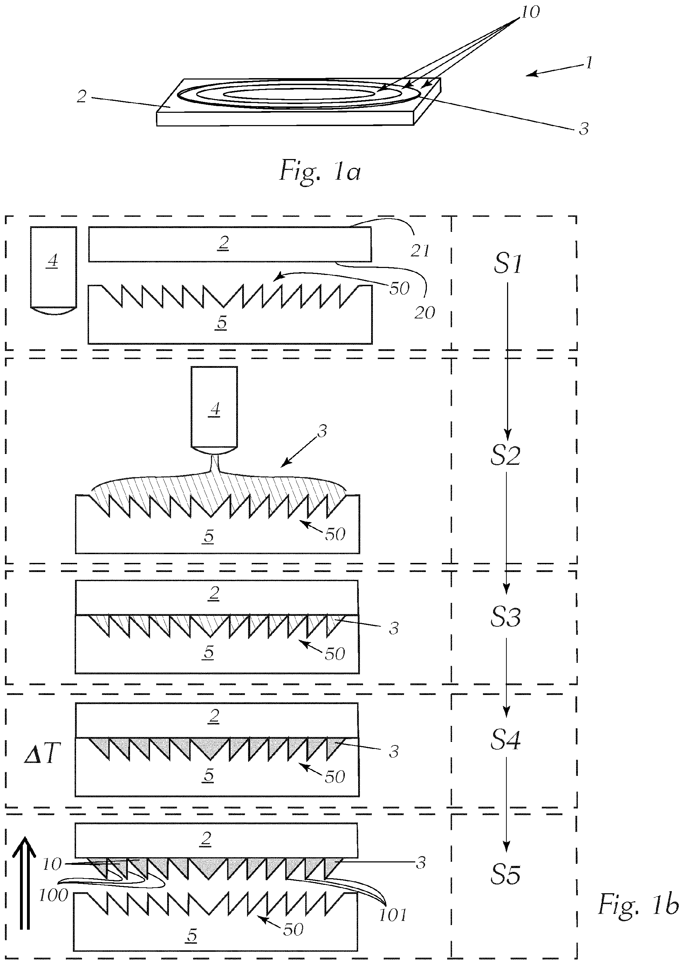

Zunächst wird auf Figuren 1a und 1b Bezug genommen. Figur 1a zeigt eine Fresnellinse **1.** Figur 1b zeigt Schritte eines Verfahrens, welches dem Abformverfahren entspricht und zum Herstellen der Fresnellinse 1 der Figur 1a verwendet werden kann. Dabei handelt es sich um ein Herstellungsverfahren für Linsen, die vorzugsweise in dem KFZ-Bereich und insbesondere in Kraftfahrzeugscheinwerfern eingesetzt werden. Die Fresnellinse 1 weist im Wesentlichen zwei Schichten auf: eine formstabile Substratschicht **2** und eine Polymerschicht **3** aus zumindest einem chemisch härtbaren Polymer **4,** die an der formstabilen Substratschicht 2 haftet. Beispielsweise ist die Polymerschicht aus einem thermisch härtbaren Silikon. Die Fresnellinse kann auch aus der Polymerschicht 3 und der formstabilen Substratschicht 2 bestehen. Das heißt es ist keine zusätzliche beispielsweise millimeterdicke Klebstoffschicht zwischen der formstabilen Substratschicht 2 und der Polymerschicht 3 notwendig. Vorzugsweise haftet Polymerschicht 3 an der formstabilen Substratschicht 2 mittels Kohäsions- und/oder Adhäsionskräfte. Formstabil heißt widerstandsfähig in der Form gegen Druck, Wärme o. Ä. Um beispielsweise in einem Kraftfahrzeugscheinwerfer eingesetzt werden zu dürfen, sollen Linsen mechanischen Standardanforderungen von Hauptscheinwerfersystemen (beispielsweise Schock- und Vibrationsanforderungen) gerecht sein. Bezüglich Vibrations- und Schockanforderungen gibt es verschiedene, dem Fachmann hinlänglich bekannte Prüfungen. Die Schockanforderungen schwanken zwischen 18 g und 50 g (je nach Achse). Im Prinzip kann die Substratschicht 2 aus jedem optisch transparenten Material sein, welches die Stabilität und die Scheinwerferanforderungen (Q-Anforderungen und gesetzliche Reglementierungen, wie beispielsweise EU Altautoverordnung) erfüllt. Aktuell werden meist jedoch nur transparente Thermoplaste oder transparentes Glas für optische Bauteile im Scheinwerfersegment eingesetzt. Transparentes Glas oder transparenter Thermoplast können als Material für die formstabile Substratschicht 2 bevorzugt werden. Die Substratschicht 2 kann eine Dicke im Millimeterbereich aufweisen, beispielsweise etwa zwischen 0,5 mm und 4 mm, insbesondere 1,1 mm dick sein. Die Polymerschicht 3 kann ebenfalls eine Dicke im Millimeterbereich aufweisen, beispielsweise etwa 0,1 mm bis 1,1 mm dick sein.

Als Materialien für die Polymerschicht können folgende chemisch härtbare Polymere bevorzugt werden: thermisch härtbares Silikon 4, UV-härtbarer Epoxidharz und UV-härtbares Acrylat. Vorzugsweise werden Silikone verwendet, deren Shore-A-Härte zwischen etwa 30 und etwa 100, insbesondere zwischen 40 und 90 liegt. Überraschend gute optische, lichttechnische und mechanische Eigenschaften weisen Linsen auf, bei welchen die Polymerschicht aus einem Zwei-Komponenten-Silikon ist, weil es, wie es sich herausstellte, eine hohe Lichttransparenz aufweist, unter Temperatur sehr schnell aushärtet und auch keine Probleme mit der Haftung auf Glas zeigt. Unter den UV-härtbaren Epoxidharzen oder den UV-härtbaren Acrylaten werden diejenigen bevorzugt, deren Shore-D-Härte von etwa 50 bis etwa 90, insbesondere von etwa 60 bis etwa 80 ist.

Der Einfachheit der Darstellung halber wird das in Figur 1b gezeigte Verfahren unter Verwendung des thermisch härtbaren Silikon 4 beschrieben. Die zumindest eine (transparente) Polymerschicht 3 wird also in diesem Ausführungsbeispiel aus thermisch härtenden Silikon 4 gebildet.

In einem ersten Schritt **S1** werden die formstabile Substratschicht 2, das thermisch härtbare Silikon 4 und eine beispielsweise aus Messing ausgebildete Negativform **5,** wie ein Messingeinsatz oder ein Messingkörper bereitgestellt. Für andere chemisch härtbare Polymere kann eine Negativform aus einem anderen Material, wie beispielsweise Silikonkautschuk verwendet werden. Aus dem Silikon 4 wird die vorgenannte Silikonschicht 3 gebildet, wobei sowohl die formstabile Substratschicht 2 als auch die Silikonschicht 3 transparent sind. Vorzugsweise weisen sowohl die formstabile Substratschicht 2 als auch die Silikonschicht 3 für Licht in einem Wellenlängenbereich zwischen etwa 400 nm und etwa 800 nm (sichtbares Licht) einen Transmissionsgrad T größer als 95%, vorzugsweise größer als 99,9%, insbesondere größer als 99,98% auf. Dies gilt auch für andere oben genannte chemisch härtende Polymere.

Die formstabile Substratschicht 2 und die Polymerschicht 3 können durchaus verschiedene Brechungsindizes aufweisen. Dies hat den Vorteil, dass die Anzahl der Parameter größer wird, die für die optischen Eigenschaften der Fresnellinse 1 oder der Linse allgemein oder auch einer optischen Abbildungsvorrichtung, in der die Fresnellinse 1 oder die Linse verwendet werden kann, relevant sind. Diese Parameter werden bei der Auslegung der entsprechenden Linse miteinberechnet und können dabei auch variiert und an eventuelle optische Vorgaben angepasst werden.

Die in Figur 1b gezeigte Negativform 5 weist eine entsprechende formgebende Oberfläche - ein Facettenmuster **50** der herzustellenden Fresnellinse 1 auf.

Figuren 1a und 1b lassen weiters erkennen, dass die formstabile Substratschicht 2 als eine Platte mit zwei einander gegenüberliegenden vorzugsweise planen Flächen **20** und **21** ausgebildet sein kann. Eine der einander gegenüberliegenden Flächen 20, 21 kann auch gekrümmt beziehungsweise leicht gekrümmt sein. Es ist auch denkbar dass beide Flächen 20, 21 gekrümmt beziehungsweise leicht gekrümmt sind. Leicht gekrümmt bedeutet sinngemäß, dass die Krümmung der Fläche das flächige Haften der Polymerschicht 3 an der einen 20 oder an der ihr gegenüberliegenden Fläche 21 der Substratschicht 2 nicht hindern soll.

In einem nachfolgenden Schritt S2 des in Figur 1b gezeigten Herstellungsverfahrens wird das thermisch härtbare Silikon 4 in die Negativform 5 gegossen beziehungsweise dosiert. Das verwendete Silikon ist weich genug, um bei Raumtemperatur (etwa 14°C bis etwa 30°C, vorzugsweise 18°C bis 23°C) und bei einem normalen Atmosphärendruck (ca. 1 bar) in die Negativform 5 gegossen beziehungsweise dosiert zu werden und diese vorzugsweise lückenlos auszufüllen, um eine dem Facettenmuster 50 der Fresnellinse 1 entsprechende Form beispielsweise unter Einwirkung der Gravitationskraft anzunehmen. Es wurde allerdings festgestellt, dass der Herstellungsvorgang bei höheren Temperaturen schneller abläuft (siehe unten).

In einem dritten Schritt **S3** wird die formstabile Substratschicht 2 auf die Negativform 5 mit dem darin befindlichen Silikon 4 aufgelegt beziehungsweise aufgesetzt. Dabei kommt das darin befindliche thermisch härtbare Silikon 4 mit einer der Negativform 5 zugewandten Fläche 20 der formstabilen Substratschicht 2 flächig in Kontakt. Die Silikonschicht 3 der Fresnellinse 1 erhält somit ihre Oberflächenstruktur, durch derer Form lichtbrechende Eigenschaften der Fresnellinse 1 festgelegt werden, durch einen (nicht temperierten) Prägeprozess. Den Figuren 1a und 1b ist zu entnehmen, dass die formstabile Substratschicht 2 entsprechend jenem Bereich der Negativform 5 dimensioniert ist, den das Facettenmuster 50 in der Negativform 5 annimmt. Es ist zweckdienlich, die formstabile Substratschicht 2 oberhalb der Negativform 5 vor dem Auflegen derart zu positionieren, dass die der Negativform 5 zugewandte Fläche 20 das Facettenmuster 50 beim Aufsetzen/Auflegen der formstabilen Substratschicht 2 auf die Negativform 5 vollständig bedecken kann.

Um die Endvernetzung des Silikons mit der formstabilen Substratschicht 2 und infolgedessen das Haften der Silikonschicht 3 an der formstabilen Substratschicht 2 zu verbessern, kann es zweckmäßig sein, die formstabile Substratschicht 2 vor dem Aufsetzen/Auflegen vorzubehandeln. Dabei ist es zweckmäßig die Fläche(n) der formstabilen Substratschicht 2 zu behandeln auf die die Silikonschicht(en) aufgebracht wird(werden). Bei dem in Figur 1b gezeigten Verfahren kann die der Negativform 5 zugewandte Fläche 20 vor dem Aufsetzen/Auflegen vorbehandelt, vorzugsweise gereinigt und flammensilikatisiert werden. Oberflächenvorbehandlung der zumindest einen Fläche 20 durch Flammensilikatisierung kann erstens in der Erzeugung einer hochenergetischen Silikatschicht (Schichtdicke in etwa 40nm) auf den Materialoberflächen durch Flammenpyrolyse (Oberflächensilikatisierung) und zweitens in der Applikation eines Haftpromotors mit angepasster Funktionalität an das vorzubehandelnde Material, hier - an die Fläche 20, bestehen. Beispielsweise kann bei der vorgenannten Vorbehandlung die SurASil^{®}- Technik angewandt werden. Die SurASil^{®}- Technik ist eine allgemein bekannte Behandlung von Oberflächen zur Beeinflussung der Haftfestigkeit von Klebstoffen, Beschichtungen und Druckmedien mittels Beflammung und ist ein seit Jahren etabliertes Verfahren in zahlreichen industriellen Bereichen (wie z. B. Sieb-, Tampon-, Digital-, und Textildruck). Eine weitere signifikante Verbesserung der Haftfestigkeit kann durch Abschneidung einer reaktiven Silikatschicht, die durch Flammenpyrolyse (Flammensilikatisierung) erzeugt wird, erreicht werden.

Durch die Vorbehandlung der Fläche 20 der formstabilen Substratschicht 2, beispielsweise der Glassubstratoberfläche, durch SurASil^{®}- Technik wird eine hochenergetische- und reaktive Silikatschicht auf die Fläche 20 aufgetragen. Insbesondere für Anwendungen im KFZ-Bereich ist es wünschenswert, Hafteigenschaften und Stabilität der Fresnellinse zu verbessern, so dass die Wahrscheinlichkeit, dass sich die Silikonschicht 3, die optische Eigenschaften der Fresnellinse 1 ausmacht, von der Fläche 20 der formstabilen Substratschicht 2 ablöst, möglichst gering gehalten werden kann, wenn die Fresnellinse in einem Kraftfahrzeuglichtmodul oder in einem Kraftfahrzeugscheinwerfer eines bereits zugelassenen Kraftfahrzeugs eingesetzt wird, um beispielsweise eine von einer Lichtquelle des Kraftfahrzeuglichtmoduls vorgeformte Lichtverteilung in Form einer Gesamtlichtverteilung, wie Abblendlichtverteilung oder Fernlichtverteilung vor das Kraftfahrzeuglichtmodul zu projizieren. Dies gilt natürlich auch für die anderen Verbund-Linsen.

Durch den vorgenannten Beschichtungsprozess (bzw. Vorvernetzung der Fläche 20 der formstabilen Substratschicht 2) mittels solcher reaktiven Silikatschicht (Schichtdicke liegt im nm-Bereich und beträgt vorzugsweise ca. 40nm) erhält man eine langzeitstabile Verbindung zwischen der Silikonschicht 3 (oder Schicht aus anderen oben genannten Polymeren) und der formstabilen Substratschicht 2, wie Glassubstrat.

Nach dem Auflegen/Aufsetzen der formstabilen Substratschicht 2 auf die Negativform 5 mit dem darin befindlichen Silikon 4 kann in einem vierten Schritt **S4** dem Silikon 4 Wärme zugeführt werden, um das Silikon 4 auszuhärten und die Silikonschicht 3 zu erhalten, die an der Fläche 20 der formstabilen Substratschicht 2 haftet. Dabei wird durch die Wärmezufuhr das Vernetzen des Silikons 4 beschleunigt. Bei anderen chemisch härtbaren Polymeren, wie bei UV-härtbaren Epoxidharzen kann das Vernetzen auch unter Verwendung von UV-Strahlung erfolgen. Bei einer bevorzugten Ausführungsform wird die Wärme dem in der Negativform befindlichen Silikon 4 durch Temperieren der Negativform 5 zugeführt. Durch Temperieren der Negativform 5, auf welches in Figur 1b das Bezugszeichen **ΔT** hindeutet, werden die Herstellungszeiten deutlich verkürzt. Dies hängt damit zusammen, dass das in der Negativform 5 befindliche Silikon 4 bei einer höheren Temperatur als die Raumtemperatur schneller vernetzt. Unter Normalbedingungen (Raumtemperatur und Atmosphärendruck) kann das Vernetzen des Silikons in der Negativform 5 einige Stunden dauern. Bei einer praxisbewährten Ausführungsform des Herstellungsverfahrens ist beispielsweise vorgesehen, dass die Negativform 5 auf eine vorbestimmte erste Temperatur erhitzt wird. Dabei liegt die erste Temperatur beispielsweise in einem Bereich zwischen etwa 90° C und etwa 200° C, vorzugsweise zwischen etwa 100° C und etwa 150° C, insbesondere zwischen etwa 100° C und etwa 120° C oder etwa 120° C und etwa 150° C. Wie bereits erwähnt, wird dadurch Vernetzungszeit des Silikons 4 reduziert, wobei das Silikon 4 zum Aushärten in der Negativform 5 bei der vorgenannten ersten Temperatur für eine vorzugsweise von der vorgenannten ersten Temperatur abhängige Dauer gehalten wird. Die Dauer beträgt beispielsweise zwischen etwa 0,5 Minuten und 6 Minuten, vorzugsweise zwischen 1 Minute und 5 Minuten. Bei einem konkreten Beispiel, bei welchem das Zwei-Komponenten-Silikon verwendet wird, wird die Negativform 5 auf etwa 120 - 150 °C erhitzt und ca. 1 Minute bei der Temperatur gehalten. Bei einem anderen Experiment (auch mit dem Zwei-Komponenten-Silikon) wird die Negativform 5 auf etwa 100 - 120 °C erwärmt, wobei sich die Aushärtezeit dementsprechend, auf ca. 5 Minuten, erhöht.

Bei anderen vorgenannten chemisch härtbaren Polymeren können andere Temperaturen und Aushärtezeiten bevorzugt werden. Beispielsweise bei einem UV-härtbaren beziehungsweise -härtenden Epoxidharz kann die erste Temperatur in einem Bereich zwischen etwa 70°C und etwa 120°C liegen. Im Allgemeinen kann es bei UV-härtenden Polymeren zweckdienlich sein, die Aushärtung unter Verwendung von UV-Strahlung weiter zu beschleunigen. Es wurde beobachtet, dass durch die kurzwellige UV-Strahlung (ca. 200 nm bis 380 nm-Wellenlänge) eine sehr schnelle Aushärtung (in nur wenigen Sekunden, beispielsweise in unter 10 Sekunden) des UV-reaktiven Polymers, wie Epoxidharzes stattfindet.

Nachdem das Silikon in der Negativform 5 vernetzt und ausgehärtet hat, wird die an der Fläche 20 der formstabilen Substratschicht 2 haftende vernetzte/ ausgehärtete Silikonschicht 3 aus der Negativform 5 entformt - Schritt **S5.**

Es kann mit Vorteil vorgesehen sein, dass beim Entformen der Silikonschicht 3 aus der Negativform 5, die Negativform 5 auf eine vorbestimmte zweite Temperatur gekühlt wird, wobei danach die fertige Fresnellinse 1 und ergo die Silikonschicht 3 von der Negativform 5 entfernt wird. Während des Kühlvorgangs zieht sich das Silikon (aufgrund seines hohen Wärmeausdehnungskoeffizienten) zusammen und sich die fertighergestellte Fresnellinse 1 somit zerstörungsfrei d.h. ohne eine potentielle Schädigung der Silikonschicht 3 aus dem Werkzeug (der Negativform 5) herauslösen lässt. Damit reduziert sich die Ausschussquote (Fehlerquote) erheblich.

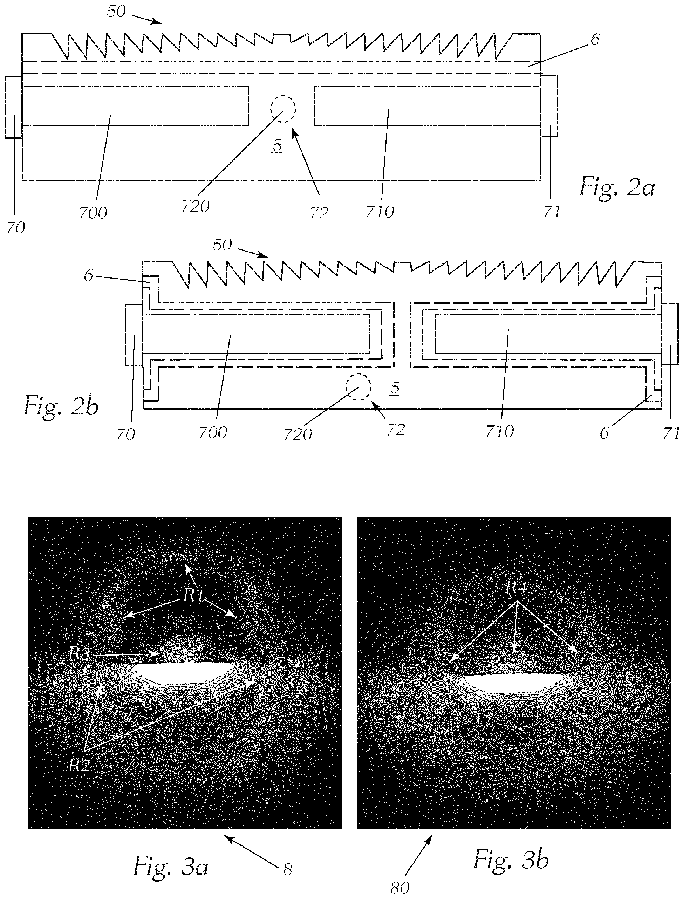

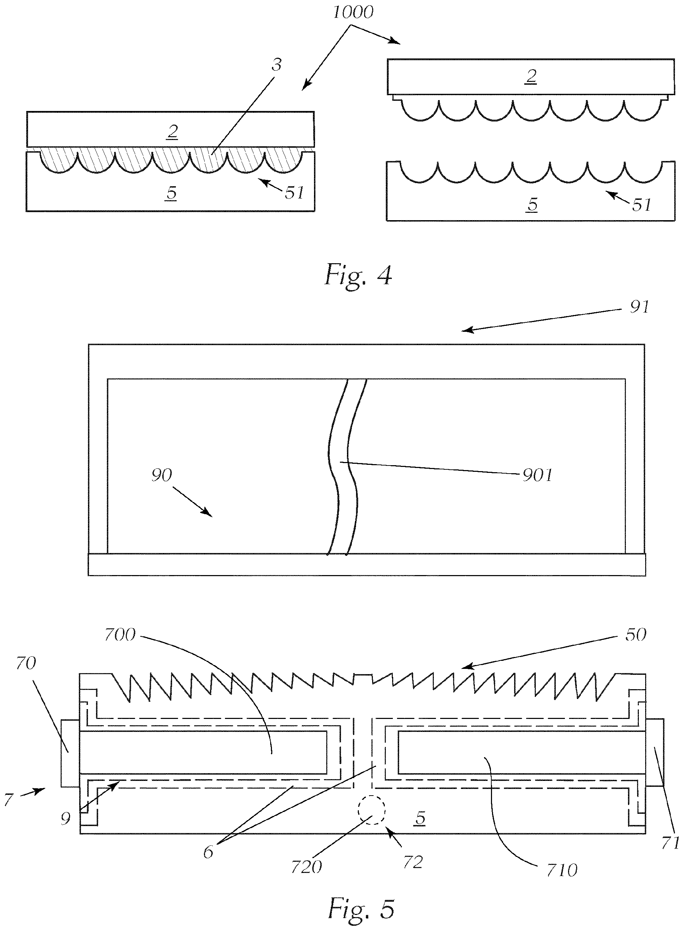

Vorzugswese wird die Fresnellinse 1 nach oben (siehe Folgepfeil in Figur 1b) aus der Negativform 5 entfernt. Die zweite Temperatur liegt dabei beispielsweise in einem Bereich zwischen etwa 40° C und etwa 70° C, vorzugsweise zwischen etwa 50° C und etwa 60° C. Es ist denkbar, dass das Kühlen mittels Druckluft, beispielsweise händisch, durchgeführt wird. Die Druckluft kann dabei durch Kompressoren bereitgestellt werden. Der Herstellungsprozess kann weiter optimiert werden, wenn beispielsweise eine Kühlvorrichtung 6 (siehe Figuren 2a, 2b, 5) vorgesehen ist, die eingerichtet ist, die Negativform 5 zu kühlen. Beispielsweise kann die Kühlvorrichtung 6 mittels Kühlflüssigkeit kühlen. Weiters kann die Kühlvorrichtung 6 an der Negativform 5 angeordnet oder von der Negativform 5 umfasst sein. Die Kühlvorrichtung 6 kann beispielsweise einen oder mehrere in der Negativform 5 ausgebildete Kühlkanäle umfassen (siehe Figuren 2a, 2b und 5).

Bei anderen vorgenannten chemisch härtbaren Polymeren können andere Temperaturen und Aushärtezeiten bevorzugt werden. Beispielsweise bei einem UV-härtbaren Epoxidharz kann die zweite Temperatur in einem Bereich zwischen 70°C und 90°C liegen.

Zum vorgenannten Erhöhen der Temperatur kann ein Heizmittel **7** vorgesehen sein. Beispielsweise kann das Heizmittel 7 eine oder mehrere Heizpatronen **70, 71** umfassen, die, wie Figuren 2a und 2b erkennen lassen, in dafür vorgesehenen Ausnehmungen **700, 710** der Negativform 5 angeordnet sein können, damit sie möglichst nah an der formgebenden Oberfläche - hier an dem Facettenmuster 50 - sein können, um ihre Wärme direkt, mit möglichst wenig Wärmeverlusten, an die formgebende Oberfläche abgeben zu können. Darüber hinaus kann das Heizmittel 7 einen Temperaturfühler **72** umfassen, der in ein dafür vorgesehenes in der Negativform 5 ausgebildetes Sackloch **720** eingeführt werden kann.

Figuren 1a und 1b lassen erkennen, dass regelmäßig angeordnete lichtbrechende ringförmige Stufen 10 der Fresnellinse 1 in der Silikonschicht 3 ausgebildet sind. Darüber hinaus ist den Figuren 1a und 1b zu entnehmen, dass die regelmäßig angeordneten lichtbrechenden ringförmigen Stufen 10 (und das dazu korrespondierende Facettenmuster 50) keine Auszugsschräge aufweisen. Dies ist durch Verwendung des vorgenannten thermisch härtbaren Silikons oder der vorgenannten chemisch härtbaren Polymere, wie UV-härtbare Epoxidharze oder -Acrylate möglich. Bei anderen konventionellen Materialien wie bei thermoplastischen Kunstoffen muss eine Auszugsschräge vorhanden sein, weil sonst die Fresnellinse 1 aus der Negativform 5 nicht sauber entformt werden kann (Rissbildung, Verzug, etc).

Im Zusammenhang mit der vorliegenden Erfindung wird unter dem Ausdruck "keine Auszugsschräge" verstanden, dass optisch nicht wirksame Seitenflächen **100** der regelmäßig angeordneten lichtbrechenden ringförmigen Stufen 10 der Fresnellinse 1 im Wesentlichen senkrecht zu der Fläche 20 der formstabilen Substratschicht 2 angeordnet sind, an der die Silikonschicht 3 haftet.

Weiters wird unter dem Begriff "optisch wirksame Fläche" jene lichtbrechende Fläche verstanden, die zum Formen des Lichtbildes vorgesehen sind. Im Gegensatz dazu sind "optisch nicht wirksame Flächen" jene Flächen, deren Präsenz im Wesentlichen nur Fehllicht verursacht. Wünschenswert ist deshalb, solche optisch nicht wirksamen Flächen möglichst gering zu halten beziehungsweise dafür zu sorgen, dass kein Licht an ihnen bricht. Das letztere kann beispielsweise durch eine spezielle Anordnung dieser Flächen im Strahlengang erreicht werden.

Darüber hinaus lässt Figur 1b erkennen, dass alle regelmäßig angeordneten lichtbrechenden ringförmigen Stufen 10 der Fresnellinse 1 gleich hoch (z.B. etwa 0,1 mm hoch) sein können. Es ist denkbar, dass die Höhe einer jeden Stufe 10 in Umlaufrichtung in einem gewissen Rahmen, beispielsweise zwischen etwa 0,01 mm und etwa 2 mm, vorzugsweise zwischen etwa 0,1 mm und etwa 1,5 mm schwankt. Darüber hinaus können (in Radialrichtung der Fresnellinse 1) unterschiedliche regelmäßig angeordnete lichtbrechende ringförmige Stufen unterschiedlich hoch sein. Beispielsweise können die Facetten 10 an den Rändern der Fresnellinse mittels eines entsprechenden Facettenmusters 50 höher ausgebildet werden als in der Mitte (siehe Figuren 2a, 2b und 5).

Bekannterweise stellt eine Auszugsschräge insbesondere bei Fresnellinsen ein Problem dar, das vor allem im Bereich der KFZ-Lichttechnik dazu führen kann, dass Fresnellinsen mit einer Auszugsschräge aufgrund ihre schlechten optischen Eigenschaften nicht eingesetzt werden. Die Auszugsschräge führt zu einem hohen Fehllichtanteil. Sogar die Auszugsschrägen in einem Bereich von 1° bis 3° (Abweichung von der Orthogonalität der optisch nicht wirksamen Seitenflächen 100 zu der Fläche 20) können zu einer solchen Menge an Fehllicht führen, dass die Fresnellinse 1 in einem Abblendlicht-Kraftfahrzeugscheinwerferlichtmodul nicht eingesetzt werden darf. Bei der vorliegenden Erfindung können nicht nur Auszugsschrägen vermieden werden, es ist sogar denkbar, Fresnellinsen mit hinterschnittigen Seitenflächen ("negative Auszugsschräge") erzeugt werden.

Eine Abblendlichtverteilung 8, die mit einer erfindungsgemäßen Fresnellinse 1 erzeugt wird, ist in Figur 3a gezeigt. Figur 3a lässt erkennen, dass die Abblendlichtverteilung 8 Streulichtbereiche **R1, R2, R3** aufweist. Die Lichtintensität in dem entsprechenden Streulichtbereich R1, R2, R3 beträgt jeweils in R1 - in etwa 40 bis 45 Candela, in R2 - in etwa 70 bis 80 Candela und in R3 - in etwa 200 bis 210 Candela. Solche Streulichtbereiche lassen sich nur schwer vermeiden. Allerdings kann die Qualität einer Lichtverteilung durch Verringern von Lichtintensitätsschwankungen zwischen den Streulichtbereichen wesentlich gesteigert werden. Überraschenderweise hat sich herausgestellt, dass die Qualität der Lichtverteilungen noch weiter gesteigert werden kann, wenn die regelmäßig angeordneten lichtbrechenden ringförmigen Stufen 10 der Fresnellinse 1 an ihren optisch nicht wirksamen Seitenflächen 100 Narbungen (hier nicht gezeigt) aufweisen. Mithilfe einer solchen Fresnellinse 1 kann eine Lichtverteilung, beispielsweise eine Abblendlichtverteilung erzeugt werden, die einen homogenen Streulichtbereich aufweist. Eine Abblendlichtverteilung **80** mit einem homogenen Streulichtbereich **R4** ist in Figur 3b gezeigt. Der homogene Streulichtbereich R4 umschließt das Intensitätsmaximumbereich der Abblendlichtverteilung 80 und weist wesentlich geringere Intensitätsschwankungen auf: in dem gezeigten Beispiel beträgt die Lichtintensität in dem ganzen homogenen Streulichtbereich R4 etwa 40 Candela. Die vorgenannten Narbungen können durch entsprechendes Gestalten der Negativform 5, genau genommen, der entsprechenden Bereiche des Facettenmusters 50 erreicht werden.

Darüber hinaus können die regelmäßig angeordneten lichtbrechenden ringförmigen Stufen 10 abgerundete (nicht gezeigt) oder spitzwinklige Spitzen 101 aufweisen. Die spitzwinkligen Spitzen 101 sind zwar schwieriger zu erreichen werden aber dennoch bevorzugt, weil sie zu einer besseren Lichtverteilung führen. Die spitzwinkligen Spitzen 101 lassen sich ausbilden, da das Silikon oder eines der vorgenannten anderen chemisch härtbaren Polymere weich genug ist, um beim Gießen in die entsprechenden (spitzwinkligen) Stellen des Facettenmusters 50 in der Negativform 5 zu gelangen.

An dieser Stelle sei angemerkt, dass das Abformverfahren nicht auf die Herstellung von Fresnellinsen 1 beschränkt ist. Durch Verändern der Form der formgebenden Oberfläche der Negativform 5 können andere Linsen erzeugt werden. Beispielsweise können Mikrolinsenarrays **1000,** beispielsweise in AT 514967 B1 der Anmelderin gezeigte Mikrolinsenarrays hergestellt werden, wenn die formgebende Oberfläche der Negativform ein Mikrolinsenarray-Muster **51** aufweist (siehe Figur 4).

Nun soll unter Bezugnahme auf Figur 5 eine Herstellungseinrichtung **9** umrissen werden, die einer Linsenherstellungseinrichtung entspricht und mit welcher eine Verbund-Linse für ein Kraftfahrzeugscheinwerferlichtmodul, beispielsweise die vorgenannte Fresnellinse 1 oder das vorgenannte Mikrolinsenarray 1000 hergestellt werden kann.

Eine solche Herstellungseinrichtung 9 umfasst eine Negativform, die eine der herzustellenden Linse entsprechende formgebende Oberfläche, beispielsweise das Facettenmuster 50 der Fresnellinse 1 oder das Mikrolinsenarray-Muster 51 aufweist. Darüber hinaus weist die Herstellungseinrichtung ein Haltemittel **90,** das vorzugsweise mit einem Vakuumsauger **901** ausgestattet ist, das eingerichtet ist, die formstabile Substratschicht (hier nicht gezeigt) mit jener Fläche 20, 21 der Negativform 5 zugewandt zu halten, die mit dem in der Negativform 5 befindlichen zumindest einen chemisch härtbaren Polymer flächig in Kontakt kommen soll.

Darüber hinaus umfasst die Herstellungseinrichtung 9 ein Positioniermittel, vorzugsweise einen Linearsteller **91.** Der Linearsteller 91 sorgt für ein sauberes Aufzusetzen/Auflegen (ohne Verkippen). Das Positioniermittel 91 ist eingerichtet, die formstabile Substratschicht oberhalb der Negativform 5 zu positionieren und die formstabile Substratschicht auf die Negativform 5 aufzusetzen/aufzulegen und, im Zuge des Entformens, von der Negativform 5 abzunehmen. Das Positionieren der formstabilen Substratschicht oberhalb der Negativform 5 erfolgt, wie oben beschrieben, derart, dass die zumindest eine Fläche 20, 21 der formstabilen Substratschicht 2 die formgebende Oberfläche, wie das Facettenmuster 50 oder das Mikrolinsenarray-Muster 51, der Negativform 5 beim Aufsetzen/Auflegen vollständig bedecken kann.

Ferner umfasst die Herstellungseinrichtung 9 eine Aushärteeinrichtung, die beispielsweise das vorgenannte Heizmittel 7 umfasst und eingerichtet ist, das chemisch härtbare beziehungsweise härtende Polymer 4 in der Negativform 5 auszuhärten und/oder das Aushärten des chemisch härtbaren Polymers 4 zu beschleunigen. Das vorgenannte Heizmittel 7 ist eingerichtet, die Negativform 5 zu erhitzen. Die Aushärteeinrichtung kann außerdem statt dem Heizmittel 7 oder zusätzlich zu dem Heizmittel 7 eine UV-Bestrahl-Vorrichtung (nicht gezeigt) umfassen, die verwendet werden kann, wenn als chemisch härtbare Polymer ein UV-härtbarer Epoxidharz oder ein UV-härtbares Acrylat verwendet wird. Ferner kann die Herstellungseinrichtung 9 eine Kühlvorrichtung (hier nicht gezeigt), beispielsweise die vorgenannte Kühlvorrichtung 6, die eingerichtet ist, die Negativform 5 zu kühlen.

Wie bereits erwähnt, kann das Heizmittel 7 eine oder mehrere Heizpatronen 70, 71 umfassen, die an der Negativform 5, vorzugsweise nah an der formgebenden Oberfläche 50, 51 der Negativform 5, angeordnet sind, damit sie ihre Wärme direkt an die formgebende Oberfläche 50, 51 und ohne große Wärmeverluste abgeben können. Die Negativform 5 kann dafür speziell vorgesehene Ausnehmungen 700, 710 aufweisen. Figur 5 lässt erkennen, dass die Heizpatronen 70, 71 in den Ausnehmungen 700, 710 aufgenommen sind, sodass sie nah an der formgebenden Oberfläche 50, 51 sind, diese aber nicht berühren, und in Betrieb ihre Wärme direkt an die formgebende Oberfläche 50, 51 abgeben können. Das Heizmittel 7 kann eingerichtet sein, die Negativform auf eine vorbestimmte erste Temperatur zu erwärmen, wobei die erste Temperatur beispielsweise in einem Bereich zwischen etwa 90° C und etwa 200° C, vorzugsweise zwischen etwa 100° C und etwa 150° C, insbesondere zwischen etwa 100° C und etwa 120° C oder etwa 120° C und etwa 150° C liegt.

Die (hier nicht gezeigte) Kühlvorrichtung ist eingerichtet, die auf die vorbestimmte erste Temperatur erwärmte Negativform 5 auf eine vorbestimmte zweite Temperatur zu kühlen, wobei die zweite Temperatur beispielsweise in einem Bereich zwischen etwa 40° C und etwa 70° C, vorzugsweise zwischen etwa 50° C und etwa 60° C liegt.

Das vorgenannte Verfahren S1 - S5 und die vorgenannte Herstellungseinrichtung 9 können auch zum Herstellen von Linsen verwendet werden, die zwei transparente Silikonschichten aufweisen. Beispielsweise bezugnehmend auf Figur 1b kann die Fresnellinse 1 nach dem fünften Schritt S5 gedreht werden, sodass die andere Fläche 21, die der Fläche 20, an der die Silikonschicht 3 bereits haftet, gegenüberliegt, der Negativform 5 zugewandt ist. Anschließend können die Schritte S2 bis S5 wiederholt werden. Dadurch wird eine Fresnellinse mit zwei an einander gegenüberliegenden Flächen 20, 21 der formstabilen Substratschicht 2 haftenden Silikonschichten erstellt. Dies findet natürlich eine entsprechende Anwendung auf die Herstellung von Mikrolinsenarrays 1000.

Die vorstehende Diskussion der Erfindung wurde zu Zwecken der Darstellung und Beschreibung vorgestellt. Das Vorstehende soll die Erfindung nicht auf die hierin offenbarte Form oder Formen beschränken. In der vorstehenden ausführlichen Beschreibung sind beispielsweise verschiedene Merkmale der Erfindung in einer oder mehreren Ausführungsformen zum Zwecke der Straffung der Offenbarung zusammengefasst. Diese Art der Offenbarung ist nicht so zu verstehen, dass sie die Absicht widerspiegelt, dass die beanspruchte Erfindung mehr Merkmale erfordert, als in jedem Anspruch ausdrücklich erwähnt wird. Vielmehr liegen, wie die folgenden Ansprüche widerspiegeln, erfinderische Aspekte in weniger als allen Merkmalen einer einzigen vorstehend beschriebenen Ausführungsform vor.

Darüber hinaus liegen, obwohl die Beschreibung der Erfindung die Beschreibung einer oder mehrerer Ausführungsformen und bestimmter Variationen und Modifikationen enthält, andere Variationen und Modifikationen innerhalb des Umfangs der Erfindung, z. B. innerhalb der Fähigkeiten und Kenntnisse von Fachleuten, nach dem Verständnis der vorliegenden Offenbarung.

## Patentansprüche

1. Fresnellinse für ein Kraftfahrzeugscheinwerferlichtmodul, wobei die Fresnellinse (1) als ein Verbund ausgebildet ist, welcher Verbund eine formstabile Substratschicht (2) und zumindest eine Polymerschicht (3) aus zumindest einem chemisch härtbaren Polymer (4) umfasst, wobei sowohl die formstabile Substratschicht (2) als auch die zumindest eine Polymerschicht (3) transparent sind und die zumindest eine Polymerschicht (3) an zumindest einer Fläche (20, 21) der formstabilen Substratschicht (2) flächig haftet, **dadurch gekennzeichnet, dass** regelmäßig angeordnete lichtbrechende ringförmige Stufen (10) der Fresnellinse (1)
- in der zumindest einen Polymerschicht (3) ausgebildet sind und
- keine Auszugsschräge aufweisen, wobei
die regelmäßig angeordneten lichtbrechenden ringförmigen Stufen (10) an ihren optisch nicht wirksamen Seitenflächen (100) Narbungen aufweisen.

2. Fresnellinse nach Anspruch 1, **dadurch gekennzeichnet, dass** die formstabile Substratschicht (2) zumindest teilweise aus transparentem Glas oder transparentem Thermoplast ist und vorzugsweise eine Dicke von etwa 0,5 mm bis etwa 4 mm, beispielsweise von 1,1 mm aufweist.

3. Fresnellinse nach Anspruch 1 oder 2, **dadurch gekennzeichnet, dass** das zumindest eine chemisch härtbare Polymer (4) aus der Gruppe ausgewählt ist, welche besteht aus: thermisch härtbarem Silikon (4), beispielsweise Zwei-Komponenten-Silikon, UV-härtbarem Epoxidharz, UV-härtbarem Acrylat, wobei das thermisch härtbare Silikon (4) beispielsweise eine Shore-A-Härte von etwa 30 bis etwa 100, vorzugsweise von etwa 40 bis etwa 90 aufweist und/oder der UV-härtbare Epoxidharz oder das UV-härtbares Acrylat vorzugsweise eine Shore-D-Härte von etwa 50 bis etwa 90, insbesondere von etwa 60 bis etwa 80 aufweist.

4. Fresnellinse nach einem der Ansprüche 1 bis 4, **dadurch gekennzeichnet, dass** die regelmäßig angeordneten lichtbrechenden ringförmigen Stufen (10) abgerundete oder spitzwinklige Spitzen (101) aufweisen.

5. Fresnellinse nach einem der Ansprüche 1 bis 4, **dadurch gekennzeichnet, dass** die regelmäßig angeordneten lichtbrechenden ringförmigen Stufen (10) durchgehend sind.

6. Fresnellinse nach einem der Ansprüche 1 bis 5, **dadurch gekennzeichnet, dass** die regelmäßig angeordneten lichtbrechenden ringförmigen Stufen (10) eine Höhe in einem Bereich zwischen etwa 0,01 mm und etwa 2 mm, vorzugsweise zwischen etwa 0,1 mm und etwa 1,5 mm, insbesondere eine Höhe von etwa 0,1 mm aufweisen.

7. Fresnellinse nach einem der Ansprüche 1 bis 6, **dadurch gekennzeichnet dass** die Fresnellinse (1) zwei transparente Polymerschichten jeweils aus zumindest einem chemisch härtbaren Polymer aufweist, welche Polymerschichten an einander gegenüberliegenden Flächen (20, 21) der formstabilen Substratschicht (2) haften.

8. Kraftfahrzeugscheinwerferlichtmodul beziehungsweise Kraftfahrzeugscheinwerfer umfassend zumindest
- eine Fresnellinse (1) nach einem der Ansprüche 1 bis 7.
